# EUROPÄISCHE PATENTANMELDUNG

(11) **EP 1 211 904 A2**
(43) Veröffentlichungstag der Anmeldung: **05.06.2002**
(21) Anmeldenummer: 01125555.1
(22) Anmeldetag: 25.10.2001
(51) Int. Cl.: H04Q 7/22

(54) **Verfahren zum Versenden und Empfangen von Kurznachrichten in einem Mobilfunknetz**

(30) Priorität: 01.12.2000 DE 10059647
(71) Anmelder: SIEMENS AKTIENGESELLSCHAFT, 80333 München (DE)
(72) Erfinder: Berg, Andreas, Dr., 10585 Berlin (DE)

(57) **Zusammenfassung**

Das Kurznachrichten-Dienste-Zentrum (Short Message Service Center, SMSC) ist ein zentraler Punkt im Netz für Short Messages. Eine für den Netzbetreiber akzeptable Lösung sollte hier ansetzen für ein geschlossenes Konzept zu SMS vom Endgerät ausgehend, MO, oder beim Endgerät endend, MT.

## Beschreibung

### Fachgebiet der Erfindung

Die Kommunikation über Mobilfunknetze erfreut sich in den letzten Jahren einer immer größeren Beliebtheit.
Besondere Verbreitung hat zum einen trotz der umständlichen Bedienung, die asynchrone Kommunikation über sogenannte Kurznachrichten (Short Messages) gefunden.
Zum Anderen ist bei bestimmten Zielgruppen, beispielsweise bei Jugendlichen oder bei Teilnehmern, die selber nicht viel telefonieren aber jederzeit erreichbar sein wollen, die Verwendung von vorausbezahlten (sogenannten Prepaid) Telefonkarten in Mobilfunkgeräten sehr populär geworden. Allerdings ist eine Kombination der beiden beliebten Features nicht ohne Weiteres möglich, die Durchführung der Abrechnung bei Kurznachrichten ist verzögert, so daß in der Vergangenheit bei so manchem Prepaid-Kunden (oder dem betroffenen Betreiber) die böse Überraschungen hinterher kam.

Eine Möglichkeit, besondere Dienste in Mobilfunknetzen zu realisieren, ist durch die Architektur der Intelligenten Netze gegeben (in den Standards ITU Q.1200 ff. festgelegt). In einer speziellen Ausgestaltungsform für GSM-Mobilfunknetze gibt es den sogenannten CAMEL (Customized applications for mobile network enhanced logic) Standard, der in einer GSM-Norm näher erläutert ist.

### Stand der Technik

Siemens als Weltmarktführer bei Intelligent Networks wird von den Netzbetreibern mit der Frage konfrontiert, wie IN den Short Message Service SMS unterstützt, besonders im Rahmen des Prepaid Dienstes PPS: In den meisten Netzen ist SMS transparent, d. h. das Switching Subsystem SSS hat keinen Triggermechanismus, der IN von dem Versenden (MO) oder Empfangen (MT) einer Short Message in Kenntnis setzen kann.

Zwar bietet Siemens proprietäre Lösungen an (z. B. ab Switch Release SR8 wird die CAMEL Subscription Information für MOCs O-CSI für einen SMS Trigger benutzt), diese funktionieren einwandfrei jedoch nur in voll integrierten Siemens Netzen: Wird in einem Overlay Netz im Bereich einer MSC eines anderen Herstellers eine Short Message aufgesetzt, kommt es darauf an ob der Fremdhersteller einen SMS Trigger anbietet oder nicht.

Für die nähere Zukunft ist nur eine Teillösung bekannt - sie wird allerdings erst in CAMEL Phase 3 unterstützt: Sie enthält einen SMS MO Trigger in den M-SSPs. Dazu wird am HLR eine SMS-CSI verwaltet, die die üblichen CSI Daten wie SCP Adresse, Service Key usw. einschließt. Schön, aber leider zu spät und unvollständig: Ein SMS MT Trigger ist frühestens in CAMEL Phase 4 eingeschlossen.

Bisherige Lösungen sind proprietär (s. o., SR8 SMS MO Trigger via O-CSI), oder ein sogenanntes 'Warm Billing': Abrechnungssysteme des Netzbetreibers sammeln SMS Tickets eine Endnutzers und senden sie 'en block' über Massendatenschnittstellen zum 'richtigen' SCP, wo ein 'negative recharge' durchgeführt wird. Die negativen Auswirkungen dieses Verfahrens fanden den Weg in die Presse, wenn die Kosten für Short Messages große Beträge erreichte und Endnutzer am SCP virtuell tief in die roten Zahlen rutschten. In solchen Fällen wird die Kontrolle eines Prepaid Systems ad absurdum geführt.

Aufgabe der Erfindung ist es, eine Lösung für Vergebührung des Kurznachrichten-Dienstes, insbesondere bei Prepaid-Vergebührung, anzubieten, die oben angeführten Nachteile vermeidet.

### Darstellung der Erfindung

Das Kurznachrichten-Dienste-Zentrum (Short Message Service Center, SMSC) ist ein zentraler Punkt im Netz für Short Messages. Eine für den Netzbetreiber akzeptable Lösung sollte hier ansetzen für ein geschlossenes Konzept zu SMS vom Endgerät ausgehend, MO, oder beim Endgerät endend, MT.
Diese Aufgabe wird gelöst durch ein Verfahren gemäß Anspruch 1 (vom Endgerät ausgehend) und durch ein Verfahren gemäß Anspruch 3 (beim Endgerät endend).

Vorteile:
- Die neue Lösung siedelt das IN Handling nicht über das Netz verstreut an allen Vermittlungsstellen M-SSPs oder GSNs an, sondern zentral an den Short Message Service Centern SMSC.
- Das SMSC agiert so, daß Anpassungen an den anderen Netzelementen minimiert sind oder gar nicht anfallen.
- Statt 'Warm Billing' können Gebühren für Short Messages unmittelbar abgerechnet werden.
- Neben der Lösung für MO Short Messages liegt auch eine für MT Short Messages vor.
- Die Umsetzung und Implementierung von CAMEL Phase 3 und 4 kommt für die meisten Netzbetreiber Jahre zu spät. Sie brauchen jetzt eine netzverträgliche, schnelle Lösung.
- Die vorhandenen Datenbanken im Netz, die HLRs werden genutzt anstatt wieder neue Datenbanken zu implementieren.
- Gelangen die Short Messages zu einem SMSC im eigenen Netz, HPLMN, benötigt man zwischen SMSC und SCP nicht notwendigerweise ein standardisiertes Protokoll.

### Kurzbeschreibung der Zeichungen

Im folgenden wird die Erfindung anhand von Ausführungsbeispielen erläutert. Dabei zeigen
Figur 1 das Versenden einer SMS (Mobile Originating, MO) und
Figur 2 das Empfangen einer SMS (Mobile Terminating, MT).

Dabei ist jeweils das derzeit bekannte Verfahren mit gestrichelte Pfeilen dargestellt, während das erfindungsgemäße Verfahren Pfeile mit durchgezogenen Linien verwendet.

### Beschreibung der bevorzugten Ausgestaltungsformen

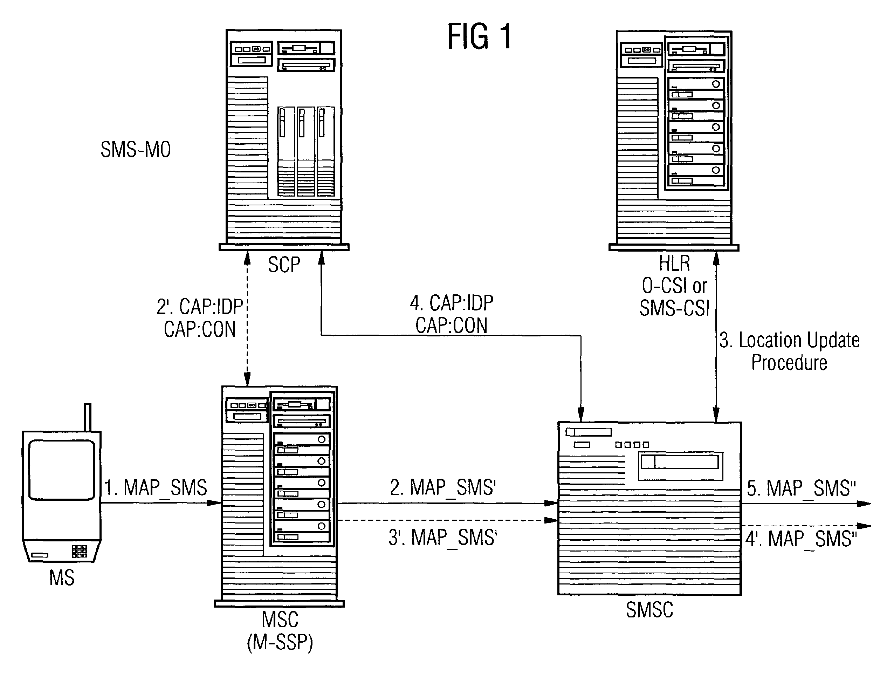

### Figur 1: SMS-MO:

Im bereits bekannten Verfahren in CAMEL Phase 3 initiiert das Senden einer Kurznachricht SMS-MO von einem Endgerät MS, 1.MAP_SMS, einen CAP3 Dialog (2'. CAP:IDP, CAP:CON) zu dem Dienstezentrum SCP, der in der SMS-CSI spezifiziert ist. Nach Beendigung des Dialogs leitet die Mobil-Vermittlungsstelle die Kurznachricht weiter zum Kurznachrichten-Dienste-Zentrum SMSC (3'. MAP_SMS'), das wiederum versucht die Kurznachricht zuzustellen (4'. MAP_SMS"). (Ähnlich: SR8, V6.1)

Bei dem erfindungsgemäßen Verfahren wird dagegen der CAP Dialog an der Mobil-Vermittlungsstelle MSC unterdrückt (entweder weil die MSC keinen SSP besitzt, oder weil dem Teilnehmer keine SMS-CSI zugewiesen wird), und die Kurznachricht wird gleich zum Kurznachrichten-Dienste-Zentrum SMSC weitergeleitet (2. MAP_SMS'). Das SMSC benötigt für das weitere Verfahren die Information, ob die SMS von einem IN Teilnehmer versendet wurde und wenn ja, zu welchem Dienstezentrum SCP ein CAP Dialog gestartet wird. Dazu führt sie GSM untypisch eine Prozedur zum HLR des Teilnehmers aus, mit der das SMSC eine geeignete CSI (CAMEL Subscription Information) erhält (3): Entweder die "Location Update" Prozedur (O-CSI, GPRS-CSI, evt. SMS-CSI) oder die "HLR Interrogation" (T-CSI, VT-CSI, GPRS-CSI).

Mit Hilfe der SCP Adresse aus der erhaltenen CSI kann nun ein Dialog zum SCP gestartet werden (4), der CAP, INAP oder auch TCP/IP als Protokoll nutzt. Nach Beendigung des Dialogs versucht die SMSC die SMS standardgemäß zuzustellen, 5. MAP_SMS".

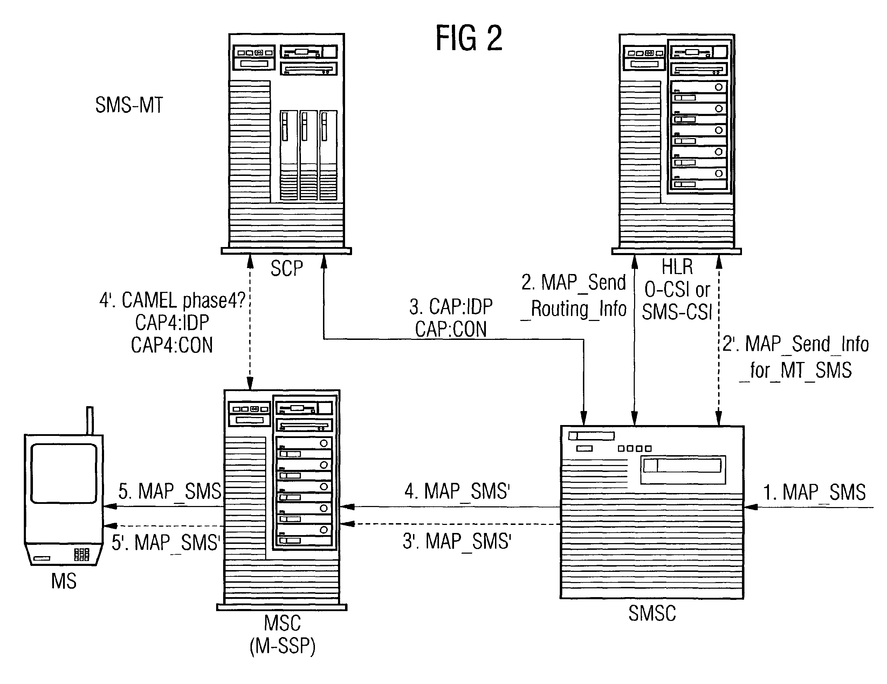

### Figur 2: SMS-MT:

Ein SMSC interrogiert nach Erhalten einer Kurznachricht, 1. MAP_SMS, das für den Empfänger (auch B-Party genannt) zuständige HLR (2', MAP_Send_Info_for_MT_SMS), um die Kurznachricht der Vermittlungsstelle MSC zustellen zu können (3'.MAP_SMS). Ab CAMEL Phase 4 (oder später) könnte ein Dialog (4') eröffnet werden zu der Dienstezentrale SCP, der in einer zu standardisierenden SMS'-CSI (CAP4:IDP, CAP4:CON) spezifiziert ist. Nach Beendigung des Dialogs versucht die MSC die Kurznachricht zuzustellen (5':MAP_SMS).

Bei dem anzumeldenden Verfahren wird anstatt der SMSspezifischen HLR Interrogation eine MT-spezifische HLR Interrogation durchgeführt (2.MAP_Send_Routing_Info), die die folgenden CAMEL Subscription Information CSIs dem SMSC zur Kenntnis bringt: T-CSI, VT-CSI, GPRS-CSI. Mit der Hilfe einer dieser CSI wird der CAP, INAP oder auch TCP/IP Dialog (3. CAP: IDP, CAP:CON) zum SCP gestartet.

Nach Beendigung des Dialogs versucht das Kurznachrichten-Dienste-Zentrum SMSC die SMS standardgemäß zuzustellen, d. h. nach dem üblichen SMSC Verfahren - z.B. Speichern der SMS falls die B-Party nicht erreichbar ist oder auch Umleiten zu einer C-Party, falls der SCP die Zustell-Adresse verändert hat, was eine weitere Interrogation zur Folge hat.

### Abkürzungsverzeichnis

- CAMEL: Customized applications for mobile network enhanced logic
- CAP: CAMEL Application Part
- CSI: CAMEL Subscription Information
- GPRS: General packet radio system
- GSN HLR: Home Location Register
- HPLMN: Home public land mobile network
- IDP: Initial Detection Point
- IN: Intelligentes Netz
- INAP: Intelligent Network Application Part
- MAP: Mobile Application Part
- MO: Mobile Originating
- MSC: Mobile Switching Center
- MS: Mobile Station
- MT: Mobile Terminating
- PPS: PrePaid Service
- SCP: Service Control Point
- SMS: Short Message Service
- SMSC: Short Message Service Center
- SSP: Service Switching Point
- SSS: Switching SubSystem
- TCP/IP: Transport Control Protocol / Internet Protocol

### Literaturverzeichnis

- GSM 09.02 -: Mobile Application Part (MAP) specification
- GSM 03.78 -: Customized Applications for Mobile Network Enhanced Logic (CAMEL); Stage 2
- GSM 09.78 -: CAMEL Application Part (CAP) specification - Phase 2
- ITU-T Q.1218 -: Intelligent Network - Interface Recommendation for Intelligent Network CS-1 (INAP)

## Patentansprüche

1. Verfahren zum Versenden von Kurznachrichten von einem mobilen Endgerät in einem Mobilfunknetz, mit folgenden Schritten:
(a) eine Kurznachricht (MAP_SMS) wird von einem mobilen Endgerät (MS) versendet, und
(b) diese Kurznachricht wird von einer Mobil-Vermittlungsstelle (MSC) empfangen, und
(c) dann direkt an das Kurznachrichten-Dienste-Zentrum (SMSC) weitergeleitet (MAP_SMS'), und
(d) das Kurznachrichten-Dienste-Zentrum beim für das Endgerät zuständige Heimatverzeichnis (HLR) eine Abfrage (3. Location Update Procedure) startet, bei der die für die Zustellung der Kurznachricht benötigten Informationen ermittelt werden, und
(e) anhand der Informationen die Kurznachricht dem Empfänger zugestellt (5. MAP_SMS") wird.

2. Verfahren nach Patentanspruch 1,
**dadurch gekennzeichnet, daß** weitere Schritte durchgeführt werden:
(d1) das Kurznachrichten-Dienste-Zentrum (SMSC) erhält vom Heimatverzeichnis (HLR) die Adresse des zuständigen Dienste-Zentrums (SCP) und
(d2) startet einen Dialog (CAP:IDP, CAP:CON) zu dem zuständigen Dienste-Zentrum.

3. Verfahren zum Empfangen von Kurznachrichten an ein mobiles Endgerät in einem Mobilfunknetz, mit folgenden Schritten:
(a) das Kurznachrichten-Dienste-Zentrum (SMSC) erhält eine Kurznachricht (1.MAP_SMS), und
(b) das Kurznachrichten-Dienste-Zentrum beim für das Endgerät zuständige Heimatverzeichnis (HLR) eine Abfrage (2. MAP_Send_Routing_Info) startet bei der die für die Zustellung der Kurznachricht benötigten Informationen ermittelt werden, und
(c) das Kurznachrichten-Dienste-Zentrum dann einen Dialog (CAP:IDP, CAP:CON) zu dem ermittelten zuständigen Dienste-Zentrum (SCP) startet, und
(d) anhand der Informationen die Kurznachricht dem Empfänger (MS) zugestellt (5. MAP_SMS) wird.

4. Verfahren nach Patentanspruch 3,
**dadurch gekennzeichnet, dass**
die Kurznachricht vom Kurznachrichten-Dienste-Zentrum (SMSC) zwischengespeichert wird, wenn der Empfänger (MS) nicht erreichbar ist.

5. Verfahren nach Patentanspruch 3 oder 4,
**dadurch gekennzeichnet, dass**
eine Zustellung der Kurznachricht zu einem Dritten Endgerät geschieht, wenn durch das Dienste-Zentrum (SCP) die Zustell-Adresse geändert wurde.
